**Europäisches Patentamt**

**European Patent Office**

**Office européen des brevets**

(19)

(11) Publication number: **0 164 485**
**A1**

(12) # EUROPEAN PATENT APPLICATION

(21) Application number: **84830318.6**

(22) Date of filing: **27.11.84**

(51) Int. Cl.⁴: **F 16 H 9/02**
**F 16 H 35/02**

(30) Priority: **09.12.83 IT 64283**

(43) Date of publication of application:
**18.12.85 Bulletin 85/51**

(84) Designated Contracting States:
**AT BE CH DE FR GB LI LU NL SE**

(71) Applicant: **Donati, Gino**
**Via Carpignola, 64**
**I-47033 Cattolica (FO)(IT)**

(72) Inventor: **Donati, Gino**
**Via Carpignola, 64**
**I-47033 Cattolica (FO)(IT)**

(74) Representative: **Baldi, Claudio**
**Viale della Vittoria 97**
**I-60035 Jesi (Ancona)(IT)**

(54) **Device for transmitting a cyclically varying rotary motion with an adjustable velocity ratio.**

(57) The instant invention relates to a device able to transform a circular uniform motion into a variable circular motion having the same value as the average angular velocity and also allowing the setting of the instantaneous angular velocity at a certain point of the trajectory of the variable circular motion.

FIG.1

EP 0 164 485 A1

0164485

- 1 -

Device for transforming a uniform circular motion into a variable
circular motion, of the same time span, with the capacity for regulating
the value of the instantaneous angular velocity at a certain point.

The instant application for industrial patent has for its object a device able to transform a uniform circular motion into a variable
circular motion having the same value as the average angular velocity
and also allowing the setting of the instantaneous angular velocity
at a certain point of the trajectory of the variable circular motion.

The device in accordance with the instant invention arises from a
unique adaption of a common stroke variator, it is therefore opportune
in the interests of explaining the aim of the invention more clearly,
xxxbxxxfxxx to briefly describe the functioning principles of said
stroke variator which suitably integrated according to this invention
allows for the tvpe of transformation and regulation detailed above.

The strike variator which is referred to here comprises a rectangular
box containing four gears arranged at the four corners and a central
slide, vertically mobile, supporting a pair of sprockets lying side
bv side, which hold under tension a transmission chain. This chain
is wound externally round the four aforesaid gears and internally round
the couple of aforesaid sprockets.

Out of the four gears,one is the drive wheel,the other is the driven
one,whilst the other two are idle.

The pair of sprockets, lying side by side, as already stated, are
mounted on a mobile cage or carriage which may  be lowered or raised
by means of a small wheel which sets in rotation a threaded bar screwed

0164485

onto the frame of the aforesaid carriage.

It is clear, therefore, that by moving the mobile slide in the appropriate direction and in a long enough stroke, it is possible to obtain each time the desired displacement between the gear, and therefore the drive shaft, and the gear, and therefore the driven shaft.

By using this stroke variator the invention aims at obtaining, always assuming the angular velocity of the drive gear remains uniform, a variable angular velocity of the driven gear which nevertheless has an average angular velocity equal to the constant angular velocity of the drive gear, there also being the capacity for setting the value which the angular velocity of the driven gear must have at a certain point during its rotation.

This object is achieved, according to this invention, by giving this mobile slide an alternate motion by means of a connecting-rod/crank device capable of varying the crank arm which obviously results in a variation in the stroke of the slide.

In the device according to this invention the mobile slide, therefore, is not moved only when a displacement is wanted between the drive shaft and the driven shaft but has a constant alternate motion obtained by means of a thrusting crank gear.

Therefore, at the entry point of this kinematic chain there is a feed shaft with a constant angular velocity whilst at the exit point there is a driven shaft with a variable angular velocity, having, however, the same time span.

In fact, during a stroke of the slide, the guide shaft is displaced in relation to the drive shaft which is then completely and precisely recovered in the successive return stroke of the slide itself; the angular velocity of the guide gear, therefore, is decelerated by a half-turn of the crank and accelerated by completing the turn.

Assuming that the time span of the guide shaft is fixed, its acceleration or deceleration values and therefore its instantaneous angular velocity depend on the instantaneous velocity values of translation of the slide, which are clearly a function, assuming that the span of the crank is fixed, of its stroke which is equal to twice the throw of the crank.

By adjusting, therefore, the throw of the crank it is possible to get various instantaneous angular velocity values of the driven shaft, but it should be clear that once the crank arm is set, the angular velocity may vary from time to time but will periodically reassume the same value.

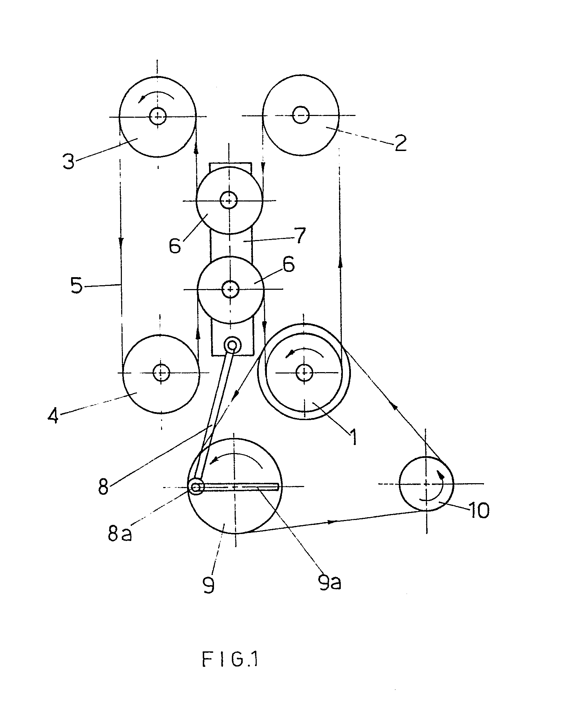

These and other objects of this invention will appear hereinafter and, for purposes of illustration but not of limitation, fig. 1 schematically shows the kinematic chain in accordance with the invention.

With reference to the aforesaid figure the device in question comprises four gears (1), (2), (3) and (4) arranged at the four corners of an imaginary rectangle and linked by a transmission chain (5) which is wound externally round them and internally round a couple of sprockets (6) which hold said chain under tension. These sprockets (6) are idle and mounted onto a central slide (7). They are set in alternate motion by a thrusting crank gear including a connecting rod (8) and a crank (9), made up of a pulley characterized by a diametrical slit (9a) along which the big end of the connecting rod (8a) slides and stops.

The drive gear (1) and the crank (9) are both set in rotation by the same driving wheel (10).

It is clear that the gears (2) and (4) are idle whilst the gear (3) is the driven entry point, the angular velocity of which will be variable.

As already stated, by varying the fixing point of the big end of the connecting rod (8a) along the slit (9a) of the crank (9) it will be possible to vary the stroke of the slide (7) and therefore influence the rate of the acceleration or deceleration of the driven gear (3), assuming that its span is fixed.

It should be noted at this stage since the slit (9a) is delibrately extended diametrically across the pulley (9), it is also possible to

- 4 -

0164485

invert the deceleration phase with the acceleration phase by simply moving the stopping point of the big end to the diametrically opposed point along the slit (9).

For the purposes of illustration we shall now describe a machine to which the device in accordance with the instant invention may be applied.

For example, an automatic packing machine fitted with a device for stamping the date on each packet on the packing line.

In this case it is usual to employ a cliché on a roller with a constant angular velocity and a circumference equal to the length of one packet.

It is obvious that the tangential velocity of the roller must be equal to the linear velocity of the forward moving line, so that at the contact point between the cliché and the line there is no sliding on either part with resulting friction which would not only ruin the quality of the stamping but might even tear the packet itself.

By keying the roller carrying the cliché onto the driven shaft of the device in accordance with the herein described invention, it will be easy and quick to vary the tangential velocity of the cliché at the point of contact with the packet, to make it always equal to the forward--moving velocity of the stamping line.

This variation is necessary each time the length of the packet changes and involves the replacement of the clichè carrving roller with one of a different size having a circumference equal to the length of the new packet.

0164485

- 1 -

Claims

1) Device for the transformation of a uniform circular motion into a variable circular motion, of the same time span, with the capacity for regulating the value of the instantaneous angular velocity at a certain point, characterized by comprising four gears, one driving, one driven and the others idle, arranged at the four corners of an imaginary rectangle and connected by a transmission chain which is wound externally round them and internally round a couple of sprockets which are idle and mounted onto a central slide set in alternate motion by a thrusting crank gear including a connecting rod and a crank, made up of a pulley characterized by a diametrical slit along which the big end of the connecting rod slides and stops.

FIG.1

European Patent
Office

EUROPEAN SEARCH REPORT

01 64485
Application number

EP 84 83 0318

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-2 212 348 (L.L. LUDINGTON) * Page 4, line 64 - page 5; figures 5-7 * | 1 | F 16 H 35/02 |
| Y | US-A-3 902 376 (J.R. HUMPHREY) * Whole document * | 1 | |
| A | FR-A-1 507 783 (VEB LOKOMOTIVBAU) | | |
| A | US-A-4 133 217 (H. BLESSING) | | |
| | | | TECHNICAL FIELDS SEARCHED (Int. Cl.4) |
| | | | F 16 H |

The present search report has been drawn up for all claims

| Place of search | Date of completion of the search | Examiner |
|---|---|---|
| THE HAGUE | 26-09-1985 | VOGT-SCHILB G.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82